# EUROPÄISCHE PATENTANMELDUNG

(11) **EP 1 260 345 A2**
(43) Veröffentlichungstag der Anmeldung: **27.11.2002**
(21) Anmeldenummer: 02009020.5
(22) Anmeldetag: 23.04.2002
(51) Int. Cl.: B29C 45/76

(54) **Spritzgiessmaschinenanordnung**

(30) Priorität: 03.05.2001 AT 7072001
(71) Anmelder: ENGEL Maschinenbau Gesellschaft mbH, 4311 Schwertberg (AT)
(72) Erfinder: Urbanek, Otto, 4200 Linz (AT)
(74) Vertreter: Hofinger, Engelbert, Dr.Dr.

(57) **Zusammenfassung**

Spritzgießmaschinenanordnung (1) mit mindestens einer Spritzgießmaschine mit mindestens einem insbesondere internen Maschinensteuerungssystem (4) - insbesondere mit einer SPS und/oder damit verbundenen Aktuatoren und/oder Sensoren - zur rechnergestützten Prozeßüberwachung und Steuerung der Spritzgießmaschine, wobei die Spritzgießmaschinenanordnung (1) mindestens eine Stromnetzübertragungseinheit (6) zur - vorzugsweise bidirektionalen und/oder echtzeitfähigen - Datenübertragung über mindestens ein elektrisches Stromnetz (9) aufweist.

## Beschreibung

Die vorliegende Erfindung betrifft eine Spritzgießmaschinenanordnung mit mindestens einer Spritzgießmaschine mit mindestens einem insbesondere internen Maschinensteuerungssystem - insbesondere mit einer SPS und/oder damit verbundenen Aktuatoren und/oder Sensoren - zur rechnergestützten Prozeßüberwachung und Steuerung der Spritzgießmaschine sowie ein Verfahren zum Betrieb einer solchen Spritzgießmaschinenanordnung.

Beim Stand der Technik sind Spritzgießmaschinen, welche durch Maschinensteuerungssysteme vorzugsweise durch speicherprogrammierbare Steuerungen (SPS) angesteuert und kontrolliert werden, bekannt. Darüber hinaus ist eine Ansteuerung und Abfrage von Prozeßdaten über an die Spritzgießmaschine angeschlossene, fest verlegte Datennetzwerke oder das Internet (EP 0 917 034 A1) und daran wiederum angeschlossene externe Datenverarbeitungseinrichtungen bekannt. Diese Lösungen erlauben zwar, die Steuerung und Überwachung von Spritzgießmaschinen von entfernten Punkten aus, sie sind jedoch an die feste Installation von zusätzlichen Datennetzwerken gebunden, was einerseits einen erheblichen Installationsaufwand bedeutet und andererseits nur wenig Flexibilität bei Veränderungen z.B. in der Maschinenaufstellung bietet.

Aufgabe der Erfindung ist es somit, eine Spritzgießmaschinenanordnung und ein Verfahren zum Betrieb dieser Spritzgießmaschinenanordnung zu schaffen, bei der die obengenannten Nachteile beseitigt sind.

Dies wird erfindungsgemäß dadurch erreicht, daß die Spritzgieß-maschinenanordnung mindestens eine Stromnetzübertragung-seinheit zur - vorzugsweise bidirektionalen und/oder echtzeitfähigen ― Datenübertragung über mindestens ein elektrisches Stromnetz aufweist.

Diese erfindungsgemäße Datenübertragung zu und/von einer Spritzgießmaschinenanordnung über ein Stromnetz (zB das 230 Volt Spannungsnetz) ermöglicht es, mit entsprechenden externen mobilen und/oder stationären Datenverarbeitungseinrichtungen wie zB einem Personalcomputer (PC) oder einem Laptop mit angeschlossener Netzstromversorgung von beliebigen Orten aus Daten von der Spritzgießmaschinenanordnung abzufragen bzw. Daten oder Steuerbefehle auf die Spritzgießmaschinenanordnung zu übertragen. Insgesamt bieten die erfindungsgemäßen Ausführungsformen eine sehr flexible Grundlage, Spritzgießmaschinen von nahezu beliebigen Orten aus zu warten, zu kontrollieren und zu steuern, wenn an diesen Orten eine entsprechende Stromnetzanbindung vorhanden ist.

Bei der erfindungsgemäßen Datenübertragung bietet sich zunächst das Standardwechselstromnetz als eine erste Variante an. Daher sieht eine günstige Variante vor, daß das elektrische Stromnetz ein Niederspannungsnetz mit einer Versorgungsspannung kleiner 1000 Volt mit einer Frequenz zwischen 50 Hz (Hertz) und 60 Hz, vorzugsweise ein 230 Volt Wechselstromnetz mit 50 Hz Wechselstromfrequenz, ist.

Alternativ hierzu können jedoch auch alle anderen Stromnetze - vorzugsweise Wechselstromnetze, wie z.B. ein Starkstromnetz oder ein Drehstromnetz mit entsprechenden Übertragungseinrichtungen erfindungsgemäß genutzt werden. So ist es besonders günstig, bei Spritzgießmaschinen, die nach dem Stand der Technik vorhandenen Drehstrom- bzw. Starkstromanschlüsse zu nutzen. Die Nutzung von normalen 230 Volt Wechselstromnetzen hat wiederum den Vorteil, daß diese Stromnetze nahezu an beliebigen externen Stellen vorhanden und zugänglich sind und damit eine erfindungsgemäße Datenübertragung von und zu Spritzgießmaschinenanordnungen von nahezu beliebigen Orten möglich ist.

Besonders günstige Varianten sehen darüber hinaus vor, daß die Stromnetzübertragungseinheit mindestens einen mit dem Maschinensteuerungssystem der Spritzgießmaschinenanordnung, vorzugs-weise über ein LAN (local area network) Netzwerk, verbundenen Adapter zum Anschluß an das elektrische Stromnetz aufweist. Hierbei ist grundsätzlich die Anbindung der Datenübertragung über ein Stromnetz an jede beliebige andere Form von Datennetzen über entsprechende Adapter möglich. So kann auch eine Anbindung an das Internet oder an Mobilfunknetze über entsprechende Adapter bzw. Umsetzer realisiert werden.

Eine besonders günstige Anordnung des Adapters der Stromnetzübertragungseinheit bei Spritzgießmaschinenanordnungen mit einer Stromhauptanschlußleitung und einem Hauptschalter ergibt sich, indem der Adapter in der Stromhauptanschlußleitung vorzugsweise zwischen dem Hauptschalter und den elektrischen Komponenten der Spritzgießmaschine angeordnet ist.

Zum Betrieb einer solchen Spritzgießmaschinenanordnung sieht ein günstiges Verfahren vor, daß das vorzugsweise interne Maschinensteuerungssystem der Spritzgießmaschine Daten - vorzugsweise bidirektional und/oder in Echtzeit - über die Stromnetzübertragungseinheit und das elektrische Stromnetz versendet und empfängt.

Bei diesem Verfahren ergeben sich zahlreiche Möglichkeiten der Datenübertragung von und zu bzw. Abfrage und Ansteuerung von Spritzgießmaschinen. So ist z.B. vorgesehen, daß das vorzugsweise interne Maschinensteuerungssystem der Spritzgießmaschine über die Stromnetzübertragungseinheit mit mindestens einer externen zeitweise mobilen und/oder stationären Datenverarbeitungseinrichtung und/oder mit mindestens einem Drucker und/oder mit mindestens einer Mobilfunkübertragungseinheit und/oder mit mindestens einem anderen Datennetzwerk - vorzugsweise dem Internet, und/oder einem LAN-Netzwerk - vorzugsweise bidirektional und/oder in Echtzeit - Daten austauscht.

Darüber hinaus ist es günstig, daß das vorzugsweise interne Maschinensteuerungssystem der Spritzgießmaschine über die Stromnetzübertragungseinheit Informationen zum Produktionsprozeß - vorzugsweise Fehlermeldungen - vorzugsweise als SMS und/oder e-mail - automatischvorzugsweise bidirektional und/oder in Echtzeit - versendet. Andere Varianten sehen vor, daß Prozeßdaten von dem vorzugsweise internen Maschinensteuerungssystem der Spritzgießmaschine durch mindestens eine externe, zeitweise mobile und/oder stationäre Datenverarbeitungseinrichtung über das elektrische Stromnetzvorzugsweise bidirektional und/oder in Echtzeit - abgefragt werden. Diese Variante ermöglicht es z.B daß aktuelle Prozeßdaten von einer Spritzgießmaschinenanordnung abgefragt werden und diese Daten in einer externen vorzugsweise eine größere Rechenleistung aufweisenden Datenverarbeitungseinrichtung analysiert und/oder zur Prozeßmodellierung verwendet werden. Hierbei können anschließend entsprechende, sich aus der Analyse und/oder der Prozeßmodellierung ergebende Steuerbefehle wiederum über das Stromnetz zur Spritzgießmaschinenanordnung zurückübertragen werden. Daher sehen günstige Varianten vor, daß das vorzugsweise interne Maschinensteuerungssystem der Spritzgießmaschine über das elektrische Stromnetz von mindestens einer externen, mobilen und/oder stationären Datenverarbeitungseinrichtung - vorzugsweise in Echtzeit und/oder bidirektionalangesteuert wird.

Im Sinne einer regelmäßigen Aktualisierung der auf einem Maschinensteuerungssystem mindestens einer Spritzgießmaschine installierten Software ist es besonders günstig, daß Software - vorzugsweise mindestens ein Steuerprogramm - über das elektrische Stromnetz zwischen dem vorzugsweise internen Maschinensteuerungssystem der Spritzgießmaschine und mindestens einer externen Datenverarbeitungseinrichtung ausgetauscht wird, wobei - vorzugsweise eine Versionsüberprüfung der auf den miteinander kommunizierenden Einrichtungen vorhandenen Programme durchgeführt wird.

Zur Wahrung der Datensicherheit sehen günstige Varianten darüber hinaus vor, daß die Spritzgießmaschinenanordnung - vorzugsweise automatisch - eine Berechtigungsprüfung durchführt, bevor - vorzugsweise bidirektional und/oder in Echtzeit - Daten und/oder Steuerbefehle mit mindestens einer - vorzugsweise mobilen - externen Datenverarbeitungseinrichtung über das elektrische Stromnetz ausgetauscht und/oder Daten von der Spritzgießmaschinenanordnung abgefragt werden.

Darüber hinaus ist ebenfalls in einer Ausführungsvariante vorgesehen, daß die Spritzgießmaschinenanordnung über die - vorzugsweise bidirektionale und/oder echtzeitfähige ― Stromnetzübertragungseinrichtung gewartet wird. Hierdurch kann zum einen eine sehr flexible und regelmäßige Wartung der Spritzgießmaschinenanordnung sichergestellt werden. Andererseits wird hierdurch eine erhebliche Reduzierung der für Wartungsarbeiten anfallenden Kosten erreicht, da viele Wartungsschritte hierdurch online durchgeführt werden können, sodaß die Notwendigkeit des Vororteinsatzes von Wartungspersonal in vielen Fällen entfallen kann.

Weitere Merkmale und Einzelheiten der vorliegenden Erfindung ergeben sich aus der folgenden Figurenbeschreibung. Dabei zeigt:

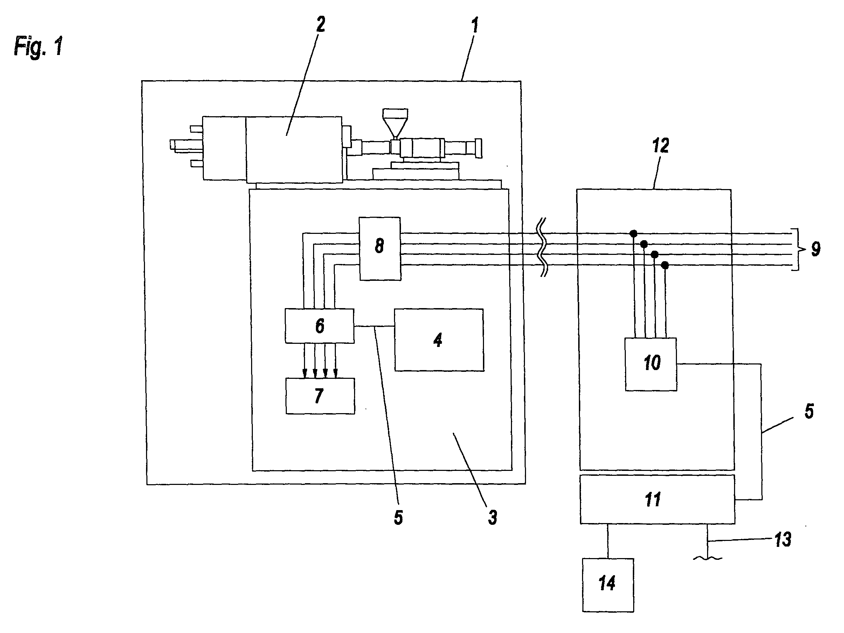

Fig. 1 eine schematische Darstellung zur Anbindung einer Spritzgießmaschinenanordnung an ein Datennetz unter Nutzung der Versorgungsleitung für die elektrische Energie.
Fig. 1 zeigt die Anbindung einer Spritzgießmaschinenanordnung 1 an ein Datennetz 11 unter Nutzung der Versorgungsleitung 9 für die elektrische Energie. Dabei werden von geeigneten Stromnetzübertragungseinheiten 6, 10 (Adapter) auf die elektrische Spannung der Energieversorgung höherfrequente Signale aufmoduliert mit deren Hilfe Daten übertragen werden können. Diese Adapter 6, 10 sind auch in der Lage die solcherart aufmodulierten Signale auszufiltern und die Datenströme auf herkömmliche Netzwerktechnologien (z.B. Ethernetz oder Token Ring etc.) 5,11 umzusetzen.

Die in Fig. 1 gezeigte Spritzgießmaschinenanordnung 1 weist ein Maschinenteil 2 und einen Steuer- und Versorgungsblock 3 einer Spritzgießmaschine auf. Innerhalb des Steuer- und Versorgungsblocks 3 der Spritzgießmaschine sind eine Maschinensteuerung 4, ein Hauptschalter 8 sowie verschiedene elektrische Komponenten 7 schematisch dargestellt. Die internen Verbindungen zwischen der Maschinensteuerung 4 und den elektrischen Komponenten 7 sowie andere hier nicht dargestellte Komponenten entsprechen dem Stand der Technik und werden deshalb nicht näher ausgeführt. Erfindungsgemäß ist nun zwischen dem Hauptschalter 8 und den elektrischen Komponenten 7 eine Stromnetzübertragungseinheit (Adapter) 6 in das Stromnetz 9 eingebaut. Dieser in der Spritzgießmaschinenanordnung 1 montierte Adapter 6 ist direkt mit der Hauptanschlußleitung 9 verschaltet. Darüber hinaus besitzt der Adapter 6 einen Anschluß für ein Datennetzwerk 5 herkömmlicher Technologie z.B. Ethernet, über welchen er mit dem Netzwerkanschluß des Maschinensteuerungssystem 4 verbunden ist. Es besteht also zwischen dem Adapter 6 und dem Maschinensteuerungssystem ein lokales Netzwerk (LAN) 5 mit wenigstens zwei Teilnehmern. Alternativ zu der hier dargestellten Variante kann der Adapter 6 auch direkt in die Maschinensteuerung 4 integriert sein. Ebenfalls an die Stromleitung 9 angeschlossen ist die Elektroversorgungsanlage 12 des Unternehmens. Innerhalb der Elektroversorgungsanlage 12 ist wiederum ein Adapter 10 zur Übertragung von Daten über ein Stromnetz an das Stromnetz 9 angeschlossen. Adapter 10 weist darüber hinaus noch einen Anschluß für ein lokales Netzwerk (LAN) 5 für den Anschluß an das gesamte lokale Netzwerk 11 des Unternehmens auf. Durch diese in Fig. 1 gezeigte Anordnung ist nun über das Stromnetz eine Datenübertragung zwischen der Maschinensteuerung 4 und beliebigen Anschlüssen des lokalen Datennetzwerks 11 des Unternehmens möglich. So ist vorgesehen, daß ein oder mehrere zusätzliche Adapter 6,10 innerhalb des firmeninternen Stromversorgungsnetzes 9 montiert sind. Alle diese Adapter dienen dazu, die Verbindung zu weiteren Netzwerksteilnehmern bzw. zu einem bestehenden lokalen Datennetzwerk 11 herzustellen. Der Adapter 10 kann analog zu Adapter 6 auch direkt in eine Datenverarbeitungseinrichtung (hier nicht dargestellt) des lokalen Datennetzwerks 11 des Unternehmens eingebunden sein. Dies empfiehlt sich vor allem, wenn das zur Datenübertragung genutzte Stromnetz ein normales 230 Volt Wechselstromnetz ist. Wird ein Starkstrom- oder Drehstromnetz zur Datenübertragung genutzt so empfiehlt sich hingegen die in Fig. 1 dargestellte Verwendung von separaten Adaptern 6 bzw. 10, welche aus Sicherheitsgründen nicht direkt sondern über Lokalnetzwerke (LAN) 5 mit den jeweiligen Maschinensteuerungen oder Datenverarbeitungseinrichtungen verbunden sind. Neben der so realisierten unternehmensinternen Datenkommunikation über Stromnetze 9 ist durch die in Fig. 1 schematisch dargestellte Anordnung auch eine Datenkommunikation zwischen einer Maschinensteuerung 4, einer Spritzgießmaschinenanordnung 1 und einer beliebigen an einem beliebigen Ort angeordneten Datenverarbeitungseinrichtung möglich. So können mit Unterstützung des jeweiligen Elektroversorgungsunternehmens (Betreiber des öffentlichen Stromnetzes) auch Adapter außerhalb der firmeninternen Elektroversorgungsleitung 9 angebracht werden, sodaß eine Datenanbindung mindestens einer Spritzgießmaschinenanordnung 1 an Datenverarbeitungseinrichtungen außerhalb des Unternehmens unter Nutzung des öffentlichen Stromversorgungsnetzes (hier nicht dargestellt) möglich ist. Alternativ kann die Datenkommunikation mit externen Datenverarbeitungseinrichtungen auch über eine Mobilfunkanbindung 14 oder eine Internetanbindung 13 realisiert werden. Hierbei können alle heute bekannten Arten und Formen der Datenübertragung wie z.B. SMS, E-Mail, WWW (world wide web) usw. zur Datenübertragung genutzt werden.

Besonders bevorzugte Anwendungsgebiete der erfindungsgemäßen Datenübertragung sind:
Das Laden von Programmen, wobei aufgrund der bidirektionalen Natur der Kommunikation eine automatische Versionserfassung der Software an der Steuerung durch die programmversendende Stelle erfolgt, sodaß sichergestellt ist, daß Updates nur erfolgen wenn dies notwendig ist.
Interaktive Dienstleistung die auf der Echtzeitfähigkeit der an der Datenverbindung beteiligten Komponenten beruhen, z.B. Prozeßoptimierungen. Daten werden Schuß für Schuß direkt von der Maschine 2, 3 abgefragt und an einen zentralen, vorzugsweise externen, Rechner übertragen. Dort werden komplexe Rechnungen ausgeführt, die die steuerungslokalen Rechnerkapazitäten überfordern würden und deren Ergebnis bzw. daraus resultierende Steuerbefehle werden anschließend vorzugsweise in Echtzeit wieder an die Steuerung rückübertragen.
Eine Simulation von komplexeren Abläufen könnte auch als Dienstleistung - auf einem zentralen Rechner - angeboten werden, wobei diese Simulation mit in Echtzeit erfaßten Daten rechnen kann.
Zur Fernwartung bzw. Fernübertragung ist es allgemein günstig, daß ein Up- und Download von Analysedaten und Prozeßüberwachungsdaten basierend auf Echtzeitdatenverarbeitung erfindungsgemäß ermöglicht wird.
Die Anwendbarkeit der erfindungsgemäßen Datenübertragung von und/oder zu Spritzgießmaschinenanordnungen 1 beschränkt sich nicht auf das einfache in Fig. 1 dargestellte Beispiel mit nur einer Spritzgießmaschine 2,3. So kann z.B. die Spritzgießmaschinenanordnung 1 mehrere Spritzgießmaschinen 2,3 mit einem oder mehreren Adaptern 6 sowie auch andere Kombinationen aufweisen.

## Patentansprüche

1. Spritzgießmaschinenanordnung mit mindestens einer Spritzgießmaschine mit mindestens einem insbesondere internen Maschinensteuerungssysteminsbesondere mit einer SPS und/oder damit verbundenen Aktuatoren und/oder Sensoren - zur rechnergestützten Prozeßüberwachung und Steuerung der Spritzgießmaschine, **dadurch gekennzeichnet, daß** die Spritzgießmaschinenanordnung (1) mindestens eine Stromnetzübertragungseinheit (6) zur - vorzugsweise bidirektionalen und/oder echtzeitfähigenDatenübertragung über mindestens ein elektrisches Stromnetz (9) aufweist.

2. Spritzgießmaschinenanordnung nach Anspruch 1, **dadurch gekennzeichnet, daß** das elektrische Stromnetz (9) ein Niederspannungsnetz mit einer Versorgungsspannung kleiner 1000 Volt mit einer Frequenz zwischen 50 Hz und 60 Hz, vorzugsweise ein 230 Volt Wechselstromnetz mit 50 Hz Wechselstromfrequenz ist.

3. Spritzgießmaschinenanordnung nach einem der Ansprüche 1 oder 2, **dadurch gekennzeichnet, daß** die Stromnetzübertragungseinheit (6) mindestens einen mit dem Maschinensteuerungssystem (4) der Spritzgießmaschinenanordnung (1), vorzugsweise über ein LAN Netzwerk (5), verbundenen Adapter zum Anschluß an das elektrische Stromnetz (9) aufweist.

4. Spritzgießmaschinenanordnung mit mindestens einer Spritzgießmaschine mit einem maschinenseitig den elektrischen Komponenten der Spritzgießmaschine vorgeschalteten Hauptschalter in einer Stromhauptanschlußleitung nach Anspruch 3, **dadurch gekennzeichnet, daß** der Adapter (6) in der Stromhauptanschlußleitung (9) vorzugsweise zwischen dem Hauptschalter (8) und den elektrischen Komponenten (7) der Spritzgießmaschine angeordnet ist.

5. Verfahren zum Betrieb einer Spritzgießmaschinenanordnung nach einem der Ansprüche 1 bis 4, **dadurch gekennzeichnet, daß** das vorzugsweise interne Maschinensteuerungssystem (4) der Spritzgießmaschine (2,3) Datenvorzugsweise bidirektional und/oder in Echtzeit - über die Stromnetzübertragungseinheit (6) und das elektrische Stromnetz (9) versendet und empfängt.

6. Verfahren nach Anspruch 5, **dadurch gekennzeichnet, daß** das vorzugsweise interne Maschinensteuerungssystem (4) der Spritzgießmaschine (2,3) über die Stromnetzübertragungseinheit (6) mit mindestens einer externen zeitweise mobilen und/oder stationären Datenverarbeitungseinrichtung und/oder mit mindestens einem Drucker und/oder mit mindestens einer Mobilfunkübertragungseinheit (14) und/oder mit mindestens einem anderen Datennetzwerk (11) - vorzugsweise dem Internet, und/oder einem LAN-Netzwerk (5) - vorzugsweise bidirektional und/oder in Echtzeit - Daten austauscht.

7. Verfahren nach Anspruch 5 oder 6, **dadurch gekennzeichnet, daß** das vorzugsweise interne Maschinensteuerungssystem (4) der Spritzgießmaschine (2,3) über die Stromnetzübertragungseinheit (6) Informationen zum Produktionsprozeßvorzugsweise Fehlermeldungen - vorzugsweise als SMS und/oder e-mailautomatisch - vorzugsweise bidirektional und/oder in Echtzeit - versendet.

8. Verfahren nach einem der Ansprüche 5 bis 7, **dadurch gekennzeichnet, daß** Prozeßdaten von dem vorzugsweise internen Maschinensteuerungssystem (4) der Spritzgießmaschine (2,3) durch mindestens eine externe, zeitweise mobile und/oder stationäre Datenverarbeitungseinrichtung über das elektrische Stromnetz (9) - vorzugsweise bidirektional und/oder in Echtzeit - abgefragt werden.

9. Verfahren nach einem der Ansprüche 5 bis 8, **dadurch gekennzeichnet, daß** das vorzugsweise interne Maschinensteuerungssystem (4) der Spritzgießmaschine (2,3) über das elektrische Stromnetz (9) von mindestens einer externen, mobilen und/oder stationären Datenverarbeitungseinrichtung - vorzugsweise in Echtzeit und/oder bidirektional - angesteuert wird.

10. Verfahren nach einem der Ansprüche 5 bis 9, **dadurch gekennzeichnet, daß** Software - vorzugsweise mindestens ein Steuerprogramm - über das elektrische Stromnetz zwischen dem vorzugsweise internen Maschinensteuerungssystem (4) der Spritzgießmaschine (2,3) und mindestens einer externen Datenverarbeitungseinrichtung ausgetauscht wird, wobei - vorzugsweise eine Versionsüberprüfung der auf den miteinander kommunizierenden Einrichtungen vorhandenen Programme durchgeführt wird.

11. Verfahren nach einem der Ansprüche 5 bis 10, **dadurch gekennzeichnet, daß** die Spritzgießmaschinenanordnung (1) - vorzugsweise automatisch - eine Berechtigungsprüfung durchführt, bevor - vorzugsweise bidirektional und/oder in Echtzeit - Daten und/oder Steuerbefehle mit mindestens einer - vorzugsweise mobilen - externen Datenverarbeitungseinrichtung über das elektrische Stromnetz ausgetauscht und/oder Daten von der Spritzgießmaschinenanordnung (1) abgefragt werden.

12. Verfahren nach einem der Ansprüche 5 bis 11, **dadurch gekennzeichnet, daß** die Spritzgießmaschinenanordnung (1) über die - vorzugsweise bidirektionale und/oder echtzeitfähige ― Stromnetzübertragungseinrichtung (6) gewartet wird.
